# EUROPÄISCHE PATENTSCHRIFT

(11) **EP 0 503 117 B1**
(45) Veröffentlichungstag und Bekanntmachung des Hinweises auf die Patenterteilung: **28.06.1995**
(21) Anmeldenummer: 91103867.7
(22) Anmeldetag: 13.03.1991
(51) Int. Cl.: G06F 11/26

(54) **Prozessorschaltung**
Processor circuit
Circuit processeur

(43) Veröffentlichungstag der Anmeldung: 16.09.1992
(73) Patentinhaber: SIEMENS AKTIENGESELLSCHAFT, 80333 München (DE)
(72) Erfinder: Burchard, Bernd, W-4300 Essen 14 (DE)

(56) Entgegenhaltungen:
- PROCEEDINGS IEEE INTERNATIONAL CONFERENCE ON COMPUTER DESIGN, 2-4.Oktober 1989,Seiten 580-584 IEEE, New York, US; Y.ZORIAN et al.: "Designing fault-tolerant,testable, VLSI processors using the IEEE P1149.1 boundary-scan architecture"
- IRE WESCON CONVENTION RECORD. Bd. 32, November 1988, NORTH HOLLYWOOD US Seiten1 - 6; S. DAVIDSON: 'Merging BIST and boundary-scan at th IC Level '
- ELECTRO. Bd. 15, 11. Mai 1990, LOS ANGELES US Seiten 36 - 41; G.D. ROBINSON:'Boundary-scan impact on board test strategies '

## Beschreibung

Die Erfindung betrifft eine zum Baugruppenselbsttest geeignete Prozessorschaltung.

Die zunehmend dichtere Plazierung der Bauteile auf den Montageträgern bei den Baugruppen läßt eine Kontaktierung durch Klammern oder Prüfspitzen für den Baugruppentest in Zukunft nicht länger zu. Somit sinken die Möglichkeiten einer Qualitätskontrolle und einer schnellen Fehlerdiagnose vorort. Aus diesem Grunde wurde von der Joint Test Action Group (JTAG) ein Standard Test Access Port und eine Boundary-Scan Architektur definiert (vgl. IEEE Standard 1149.1/D6, Standard Test Access Port and Boundary-Scan Architecture, Draft, November 22, 1989).

Bei einer diesem Standard entsprechenden Schaltung werden zum Testen Befehle und zugehörige Daten in eine Schaltungskomponente seriell eingelesen und nach Ausführung des Befehls das Ergebnis seriell ausgelesen. Die Abfolge der einzelnen Operationen wird durch einen Busmaster überwacht und gesteuert. Als Busmaster fungiert entweder eine automatische Testeinrichtung oder eine Schaltungskomponente, die mit einem, zu einer umfassenden Wartungseinrichtung gehörenden Testbus gekoppelt ist. Zur Überwachung und Steuerung werden Testmodusauswahleingänge und Testtakteingänge der einzelnen Schaltungskomponenten mit dem Busmaster verbunden. Ausgehend von einem Initialisierungszustand, in dem die standardgemäße Schaltung inaktiv ist, wird anschließend eine festgelegte Abfolge von Operationen abgearbeitet.

Zunächst wird im allgemeinen der Befehlscode der einzelnen durchzuführenden Operationen in die jeweiligen Schaltungskomponenten geladen. Eine dem genannten Standard entsprechende Testlogik ist dabei derart ausgelegt, daß das Schieben der Befehlsworte auf Schaltungsblöcke, die durch diesen Befehl gesteuert werden, keinen Einfluß hat. Die an diese Schaltungsblöcke übertragenen Befehle werden nur dann geändert, wenn der Schiebevorgang beendet ist.

Nachdem das Befehlswort geladen worden ist, wird die ausgewählte Testschaltung aktiviert. In einigen Fällen sind jedoch, bevor ein Abarbeiten erfolgen kann, Datenworte in die Testschaltung einzugeben. Das Laden der Datenworte erfolgt dabei prinzipiell in gleicher Weise wie zuvor das Laden der Befehlsworte, wobei die Datenworte keinen Einfluß auf die Befehlsworte haben.

Anschließend wird der geladene Befehl gegebenenfalls unter Berücksichtigung der eingegebenen Daten abgearbeitet und das Ergebnis durch Schieben aus der jeweiligen Schaltungskomponente an den Busmaster oder mittels des Busmasters seriell ausgelesen. In Fällen in denen der Befehl gleichbleibt und sich nur die Daten ändern, werden lediglich die neuen Daten in die jeweilige Schaltungskomponente geladen während gleichzeitig das aus den vorherigen Daten ermittelte Ergebnis ausgelesen wird. Ein erneutes Laden des Befehls ist dabei nicht notwendig.

Damit wird nun die Beobachbarkeit und die Stimulierbarkeit aller erfaßten Leitungen und Schaltungsblöcke erzielt sowie eine einfache, kostengünstige Schnittstelle, beispielsweise zu automatischen Testeinrichtungen, mit der Möglichkeit einer Ferndiagnose geschaffen.

In Regel 3.1.1 des obengenannten Standards ist jedoch ausdrücklich gefordert, daß die Anschlüsse des definierten Test Access Ports nicht für andere Zwecke benutzt werden dürfen. Damit ist es zum Beispiel nicht möglich, bei einer Baugruppe mit Prozessor zum einen diesen die Testleitungen für einen Baugruppenselbsttest stimulieren zu lassen und zum anderen trotzdem einen Fertigungstest durch eine externe Testlogik über denselben Testbus durchzuführen. Durch die Stimulierung im Fall eines Selbsttests würden die an der Baugruppe vorzusehenden Eingangsanschlüsse zu Ausgangssanschlüssen und umgekehrt.

Aufgabe der Erfindung ist es daher, eine Prozessorschaltung anzugeben, die unter Einhaltung der in obengenanntem Standard aufgeführten Bedingungen neben dem Test der Prozessorschaltung selbst auch einen Baugruppenselbsttest und einen Baugruppenfertigungstest ermöglicht.

Die Aufgabe wird durch eine Prozessorschaltung gemäß Patentanspruch 1 gelöst. Ausgestaltungen und Weiterbildungen des Erfindungsgedankens sind Gegenstand von Unteransprüchen.

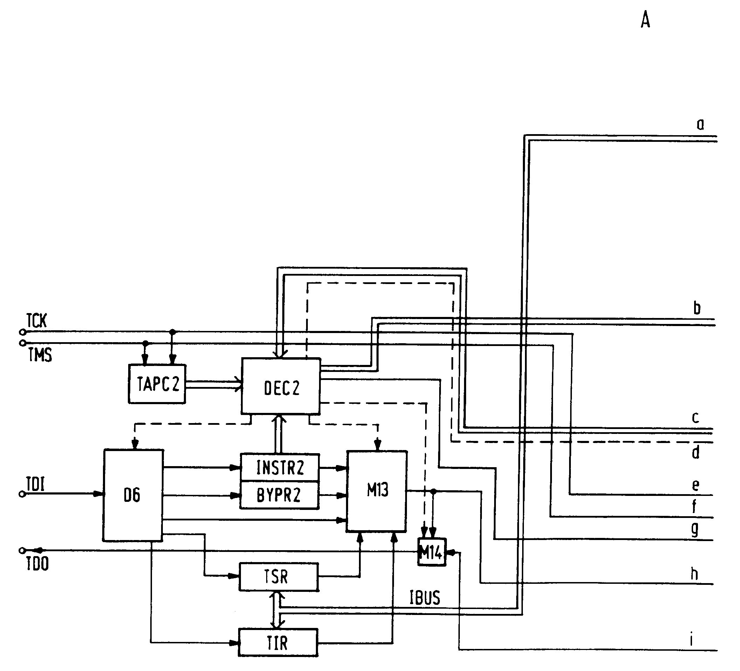

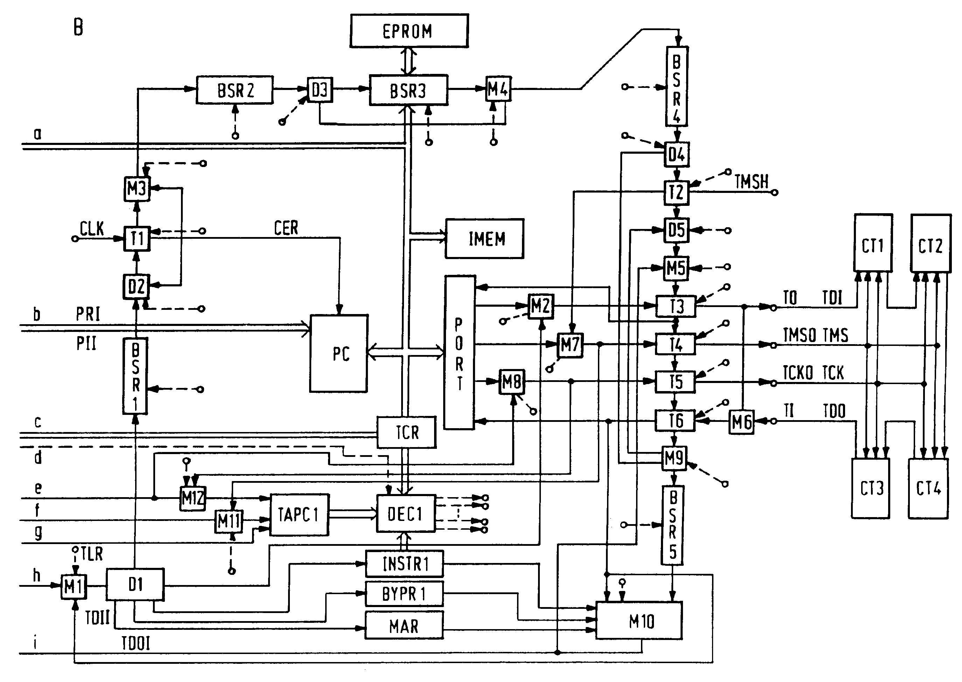

Die Erfindung wird nachfolgend anhand des in der einzigen Figur der Zeichnung dargestellten Ausführungsbeispiels näher erläutert.

Zur Einhaltung von Formerfordernissen ist die einzige Figur entlang gekennzeichneter Schnittpunkte a bis i in zwei Teilfiguren aufgespalten.

Eine erfindungsgemäße Prozessorschaltung weist beispielsweise einen Demultiplexer D6 auf, dessen Eingang mit einem externen Testdateneingang TDI verbunden ist. An jeweils einem Ausgang des Demultiplexers D6 sind die Eingänge eines Befehlsregisters INSTR2, eines Bypassregisters BYPR2, eines Teststatusregisters TSR und eines Testinforegisters TIR angeschlossen, wobei das Teststatusregister TSR und das Testinforegister TIR zusätzlich mit einem internen bidirektionalen Bus IBUS gekoppelt sind. Die Ausgänge des Befehlsregisters INSTR2, des Bypassregisters BYPR2, des Teststatusregisters TSR und des Testinforegisters TIR sind auf jeweils einen Eingang eines Multiplexers M13 geführt. Ein weiter Eingang des Multiplexers M13 ist zudem mit einem Ausgang des Demultiplexers D6 verbunden. Ein Multiplexer M14 ist eingangsseitig zum einen mit dem Ausgang des Multiplexers M13 und zum anderen mit einer internen Testdatenausgangsleitung TDOI gekoppelt. Der Ausgang des Multiplexers M14 ist mit einem externen Testdatenausgang TDO verbunden.

Weiterhin ist ein Testcontroller TAPC2 vorgesehen, dessen einer Eingang an einen externen Testmodusauswahleingang TMS und dessen anderer Eingang an einen externen Testtakteingang TCK angeschlossen ist, und ein Testcontrollregister TCR, das an den internen bidirektionalen Bus IBUS angeschlossen ist, vorgesehen. Mit dem Ausgang des Testcontrollregisters TCR ist ebenso wie mit den Ausgängen des Testcontrollers TAPC2 und des Befehlsregisters INSTR2 ein Decoder DEC2 über interne unidirektionale Busleitungen verschaltet. Die Ausgänge des Decoders DEC2 sind an eine interne Prozessorresetleitung PRI, eine interne Prozessorinterruptleitung PII und eine Testlogikresetleitung TLR angeschlossen.

Neben dem Teststatusregister TSR, dem Testinforegister TIR und dem Testcontrollregister TCR sind zudem ein interner Speicher IMEM, ein mehrere Ein- und Ausgabeleitungen aufweisender Port PORT und ein Prozessorkern PC, der zusätzlich an die interne Prozessorresetleitung PRI, die interne Prozessorinterruptleitung PII, die Testlogikresetleitung TLR und eine Zellenleseleitung CER angeschlossen ist, mit dem internen bidirektionalen Bus IBUS gekoppelt. Der interne Speicher IMEM ist zur Aufnahme des Prozessorprogramms und zur Aufnahme von Daten vorgesehen und kann sowohl als flüchtiger als auch als nichtflüchtiger Speicher ausgelegt sein.

Weiterhin ist ein Multiplexer M1 vorgesehen, dessen einer Eingang an den Ausgang des Multiplexers M13 und dessen anderer Eingang an einer ersten Eingabeleitung des Ports PORT angeschlossen ist. Der Ausgang des Multiplexers M1 über eine interne Testdateneingangsleitung TDII ist auf den Eingang eines Demultiplexers D1 geführt. An Ausgängen des Demultiplexers D1 sind der serielle Eingang eines Boundary-Scan-Registers BSR1, ein Befehlsregister INSTR1, ein Bypassregister BYPR1, ein Herstellerregister MAR und ein Multiplexer M2 angeschlossen. Dem Boundary-Scan-Register BSR1 ist ein Demultiplexer D2 nachgeschaltet. Ein Ausgang des Demultiplexers D2 ist mit einem Serielleingang einer Registerzelle T1 verbunden, während ein Paralleleingang mit einem externen Takteingang CLK verschaltet ist. Der andere Ausgang des Demultiplexers D2 ist auf einen Eingang eines Multiplexers M3 geführt, dessen anderer Eingang an einen Seriellausgang der Speicherzelle T1 angeschlossen ist. Dem Multiplexer M3 ist ein Boundary-Scan-Register BSR2 nachgeschaltet, dem wiederum ein Demultiplexer D3 folgt. An einem Ausgang des Demultiplexers D3 ist dabei ein Boundary-Scan-Register BSR3 angeschlossen, dessen serieller Ausgang wiederum auf einen Multiplexer M4 geführt ist. Der andere Eingang des Multiplexers M4 ist mit einem anderen Eingang des Demultiplexers D3 verbunden. Neben der seriellen Ein- und Ausgabe ist beim Boundary-Scan-Register BSR3 beim Ausführungsbeispiel auch ein paralleler Zugriff möglich. Dazu ist das Boundary-Scan-Register BSR3 zum einen an den internen bidirektionalen Bus IBUS und zum anderen an einen externen bidirektionalen Bus EBUS angeschlossen. Beide Busse sind hier dabei zur Übertragung von Daten, Adressen und Steuersignalen in beiden Richtungen vorgesehen. Dem Multiplexer M4 schließt sich ein Boundary-Scan-Register BSR4 an. Dem Boundary-Scan-Register BSR4 ist ein Demultiplexer D4 nachgeschaltet. Ein Ausgang des Demultiplexers D4 ist auf einen Serielleingang einer Registerzelle T2 geführt, deren Paralleleingang mit einem zusätzlichen externen Testmodusauswahleingang TMSH verbunden ist. Einem Seriellausgang der Registerzelle T2 ist ein Demultiplexer D5 nachgeschaltet, dessen einer Ausgang mit einem Ausgang eines Multiplexers M5 verschaltet ist. Ein anderer Eingang des Multiplexers M5 ist an die interne Testdatenausgangsleitung TDOI angeschlossen.

Ein Parallelausgang einer Registerzelle T3, deren Serielleingang mit dem Ausgang des Multiplexers M5 verbunden ist, sind an einen externen Testausgang TO bzw. an eine zweite Eingabeleitung des Ports PORT angeschlossen. Es folgen eine Registerzelle T4, deren Serielleingang mit einem Seriellausgang der Registerzelle T3 und deren Parallelausgang mit einem externen Testmodusauswahlausgang TMSO verbunden ist, und eine Registerzelle T5, deren Serielleingang mit einem Seriellausgang der Registerzelle T4 verbunden ist und deren Parallelausgang an einen externen Testtaktausgang TCKO angeschlossen ist. Der Parallelausgang der dritten Registerzelle T3 ist zudem mit einem Eingang eines Multiplexers M6 verschaltet, dessen anderer Eingang mit einem externen Testeingang TI verbunden ist. Eine Registerzelle T6 ist über einen Serielleingang mit einem Seriellausgang der Registerzelle T5 und über einen Paralleleingang mit dem Ausgang des Multiplexers M6 gekoppelt. Ihr Parallelausgang ist an die erste Eingabeleitung des Ports PORT angeschlossen. Es folgt ein Multiplexer M2, dessen einer Eingang an die erste Ausgabeleitung des Ports PORT und dessen anderer Eingang an einem weiteren Ausgang des Demultiplexers D1 angeschlossen ist. Sein Ausgang ist mit einem Paralleleingang der Registerzelle T3 verbunden. Außerdem ist ein Multiplexer M7, dessen einer Eingang an die zweite Ausgabeleitung des Ports PORT und dessen anderer Eingang mit einem Parallelausgang der Registerzelle T2 verbunden ist sowie dessen Ausgang mit einem Paralleleingang der Registerzelle T4 gekoppelt ist, und ein Multiplexer M8, dessen einer Eingang an die dritte Ausgabeleitung des Ports PORT und dessen anderer Eingang an den externen Testtakteingang TCK angeschlossen ist und dessen Ausgang mit einem Paralleleingang der fünften Registerzelle T5 verbunden ist, vorgesehen. Ein Seriellausgang der Registerzelle T6 ist auf einen Eingang eines Multiplexers M9 geführt, bei dem jeweils ein weiterer Eingang an jeweils einen anderen Ausgang der Demultiplexer D5 und D6 angeschlossen ist. Dem Multiplexer M9 ist ein Boundary-Scan-Register BSR5 nachgeschaltet. Der Ausgang des Boundary-Scan-Registers BSR5 ist auf einen Multiplexer M10 geführt, bei weitere Eingänge jeweils mit Ausgängen des Befehlsregisters INSTR1, des Bypassregister BYPR1 und dem Herstellerregister MAR sowie mit der ersten Eingabeleitung des Ports PORT verbunden sind und dessen Ausgang an die interne Testdatenausgangsleitung TDOI angeschlossen ist.

Schließlich enthält die gezeigte Prozessorschaltung einen Multiplexer M12, dessen einer Eingang an den externen Testtakteingang TCK und dessen anderer Eingang an den Ausgang des Multiplexers M8 angeschlossen ist, und einen Testcontroller TAPC1, bei dem jeweils ein Eingang über eine interne Testmodusauswahlleitung TMSI an einen Ausgang eines Multiplexers M11 und über eine interne Testtaktleitung TCKI an den Ausgang des Multiplexers M12 sowie an die Testlogikresetleitung TLR angeschlossen ist. Beim Multiplexer M11 ist ein Eingang mit dem externen Testmodusauswahleingang TMS und ein anderer Eingang mit dem Ausgang des Multiplexers M7 verbunden. Ein Decoder DEC1, der über interne unidirektionale Busleitungen mit Ausgängen des Testcontrollregisters TCR, des Testcontrollers TAPC1 und des Befehlsregisters INSTR1 verbunden ist, steuert die Demultiplexer D1 bis D5, die Multiplexer M1 bis M12, die Boundary-Scan-Register BSR1 bis BSR5 und die Registerzellen T1 bis T6 jeweils über Steuerleitungen. Der Decoder DEC1 ist dabei über eine Steuerleitung mit dem Decoder DEC2 verbunden. Dieser steuert die Multiplexer M13 und M14 sowie den Demultiplexer D6 ebenfalls über entsprechende Steuerleitungen.

Die erfindungsgemäße Prozessorschaltung sei Bestandteil einer Baugruppe, die beispielsweise einen nichtflüchtigen Speicher EPROM sowie weitere Schaltungsteile CT1 bis CT4 enthält. Als Schnittstelle der Baugruppe sind der externe Testtakteingang TCK, der externe Testmodusauswahleingang TMS, der externe Testdateneingang TDI und der externe Testdatenausgang TDO der Prozessorschaltung vorgesehen. Die entsprechenden externen Eingänge der übrigen Schaltungsteile CT1 bis CT4 sind mit dem externen Testausgang TO, dem externen Testmodusauswahleingang TMSO, dem externen Testtaktausgang TCKO und dem externen Testeingang TI derart verknüpft, daß die Testmodusauswahleingänge bzw. Testtakteingänge TMS und TCK der übrigen Schaltungsteile CT1 bis CT4 zusammen am Testmodusauswahleingang TMSO bzw. am Testtaktausgang TCKO der Prozessorschaltung angeschlossen sind, also parallel geschaltet sind, während bezüglich des Testausgangs TO bzw. des Testeingangs TI der Prozessorschaltung und der Testdateneingänge TDI bzw. der Testdatenausgänge TDO der einzelnen Schaltungsteile CT1 bis CT4 diese zusammen mit der Prozessorschaltung in Reihe geschaltet sind.

Es sind folgende Testfälle möglich: Normalzustand, Fertigungstest und Selbsttest.

Im Normalzustand wird nach dem Rücksetzen des Prozessorkerns PC, beispielsweise durch Power-up-Reset, Soft- oder Hardware-Reset des Prozessorkerns oder Reset über einen optionalen, speziellen Hardware-Reset der Testlogik die Prozessorschaltung mit einem Boundary-Scan entsprechend dem eingangs genannten Standard versehen, das heißt, es werden Befehle und Daten in die Prozessorschaltung eingegeben und die Prozessorschaltung daraufhin aktiviert. Die Durchführung des Tests sowie die Ausgabe des Testergebnisses erfolgt ebenfalls gemäß dem eingangs genannten Standard.

Beim Selbsttest werden die Testleitungen der übrigen Schaltungsteile CT1 bis CT4 der Baugruppe seriell verknüpft, wodurch es möglich ist, daß der Prozessorkern PC die Leitungen für den Selbsttest über einem Parallelport, nämlich dem Port PORT, stimuliert. Der Prozessorkern PC ist beispielsweise so ausgebildet, daß das Bescheiben der Registerzelle T1 einen eigenen Testvorgang auslöst, wodurch ein kompleter Test aller Verbindungen der Baugruppe möglich ist. Der Port PORT bildet dabei alle im Vergleich zum standardgemäßen Port komplementären Ausund Eingänge nach, das bedeutet, der Testausgang TO der Prozessorschaltung wird mit dem standardgemäßen Testeingang TDI, der Testeingang TI der Prozessorschaltung wird mit dem standardgemäßen Testdatenausgang TDO, der Testmodusauswahlausgang TMSO der Prozessorschaltung mit dem standardgemäßen Testmodusauswahleingang TMS und der Testtaktausgang TCKO der Prozessorschaltung mit dem standardgemäßen Testtakteingang TCK verbunden. An dieser standardgemäßen Schnittstelle werden, wie im Ausführungsbeispiel gezeigt, weitere Schaltungsteile CT1 bis CT4 angeschlossen und mittels der Prozessorschaltung getestet. Die Eingänge der ebenfalls dem genannten Standard entsprechenden Baugruppenschnittstelle - der Testtakteingang TCK, der Testmodusauswahleingang TMS und der Testdateneingang TDI der Prozessorschaltung - werden innerhalb der Prozessorschaltung abgeklemmt. Die zughörigen Leitungen innerhalb der Prozessorschaltung werden statt dessen mit den entsprechenden Ein- und Ausgabeleitungen des Ports PORT gekoppelt. Dazu sind parallel schreib- und lesbare Registerzellen, die Registerzellen T3 bis T6, sowie die zugehörigen Multiplexer M2, M5, M6, M7, M8, M9 und die Multiplexer D4, D5, vorgesehen. Die Registerzellen T1 bis T6 entsprechen im wesentlichen den Zellen der Boundary-Scan-Register BSR1 bis BSR5.

Der Testcontroller TAPC1 wird anstelle der internen Testtaktleitung TCKI und der internen Testmodusauswahlleitung TMSI mit der dritten bzw. zweiten Ausgabeleitung des Ports PORT gekoppelt. Der externe Testdatenausgang TO, der externe Testmodusauswahlausgang TMSO, der externe Testtaktausgang TCKO und der externe Testeingang TI sind während dieser Phase inaktiv. Bei Prozessorschaltungen, die über keinen internen Daten- und Programmspeicher IMEM verfügen, muß, um einen Zugriff auf den externen Speicher EPROM zu ermöglichen, auch der externe Bus EBUS aus dem Testvorgang herausgenommen werden und zwar mittels des Demultiplexers D2 und des Multiplexers M4.

Der Prozessorkern FC startet den Selbsttest durch Setzen eines Statuswortes im Testcontrollregister TCR. Anschließend schreibt er in eine der ersten Ausgabeleitung zugeordneten Zelle des Ports PORT ein für den Test der übrigen Schaltungsteile CT1 bis CT4 und den Selbsttest notwendiges Testdatum. Gleichzeitig wird auch das Testmodusauswahlsignal für sich und die übrigen Schaltungsteile CT1 bis CT4 gesetzt. Danach wird ein software-oder hardwaremäßig generierter Taktimpuls auf der dritten Ausgabeleitung des Ports PORT ausgegeben. Bei den nun für Testvorgänge folgenden Schiebeoperationen durchläuft ein Testdatum der Reihe nach die folgenden Schaltungselemente: die Registerzelle T3; die übrigen Schaltungsteile CT1, CT2, CT4, CT3; den Multiplexer M6; die Registerzelle T6; den Multiplexer M1; den Demultiplexer D1; das Boundary-Scan-Register BSR1; den Demultiplexer D2; nur bei interner Takterzeugung der Registerzelle T1; den Multiplexer M3; das Boundary-Scan-Register BSR2; den Demultiplexer D3; nur bei internem Testprogrammspeicher das Boundary-Scan-Register BSR3; den Multiplexer M4; das Boundary- Scan-Register BSR4; den Demultiplexer D4; die Registerzelle T2; den Demultiplexer D5; den Multiplexer M9; das Boundary-Scan- Register BSR5; den Multiplexer M10; den Multiplexer M5 und schließlich die Registerzelle T3. In Registerzelle T3 kann dabei das Ergebnis des prozessoreigenen Tests und in Registerzelle T6 das Ergebnis des Tests der übrigen Schaltungsteile CT1 bis CT4 gelesen werden.

Für den Fertigungstest wird durch entsprechendes Setzen des Befehlsregisters INSTR2 über einen externen Testdateneingang TD1, den externen Testmodusauswahleingang TMS, den externen Testtakteingang TCK und den externen Testdatenausgang TDO mit Hilfe der entsprechenden Multiplexer und Demultiplexer und des Decoders DEC2 der externe Testdateneingang TDI mit dem externen Testausgang TO, der externe Testeingang TI mit dem externen Testdatenausgang TDO und der externe Testtakteingang TCK mit dem externen Testtaktausgang TCKO gekoppelt. Die Testmodusauswahleingänge TMSO der übrigen Schaltungsteile CT1 bis CT4 der Baugruppe werden weiterhin mittels des externen Testmodusauswahlausgangs TMSO der Prozessorschaltung stimuliert. Der externe Testmodusauswahlausgang TMSO wird seinerseits über den zusätzlichen Testmodusauswahleingang TMSH angesteuert. Dieser wird, ebenso wie der externe Testausgang TO, der externe Testmodusauswahlausgang TMSO, der externe Testtaktausgang TCKO sowie der externe Testeingang TI für den Test der Prozessorschaltung selbst nicht verwendet. Daher ist für die gleichzeitige Durchführung des prozessoreigenen Tests im Rahmen des Fertigungstests ein besonderer Befehl im Befehlsregister INSTR2 vorgesehen, der sich von dem Befehl, der im Normalzustand verwendet wird, unterscheidet.

Die im eingangs genannten Standard aufgeführten Befehle, beispielsweise die Befehle Bypass, Sample Preload, Extest, Intest oder Runbist sowie optional ein Befehl zum Lesen des Herstellerregisters MAR - bewirken eine entsprechende Setzung der Multiplexer M1 bis M14 sowie der Demultiplexer D1 bis D6 in den jeweiligen Betriebsarten. Die Betriebsart Selbsttest wird über das Testcontrollregister TCR durch den Prozessor PC und die Betriebsart Fertigungstest über das Befehlsregister INSTR2 durch Ansteuerung des ersten Testdateneingangs TDI, des externen Testtakteingangs TCK, des externen Testmodusauswahleingangs TMS und des externen Testdatenausgangs TDO eingestellt. Die Betriebsart Selbsttest kann nur dann gültig werden, wenn der Testcontroller TAPC2 und das Befehlsregister INSTR2 so stehen, daß der vom externen Testdateneingang TDI ausgehende Datenpfad über den Demultiplexer D6, über das Befehlsregister INSTR 2, das Bypassregister BYPR2, das Teststatusregister TSR oder das Testinforegister TIR, über den Multiplexer M13 und schließlich über den Multiplexer M14 zum externen Testdatenausgang TDO führt. Diese Pfade werden zusammen mit der Betriebsart des den Testcontroller TAPC2, den Decoder DEC2, den Demultiplexer D6, das Befehlsregister INSTR2, das Bypassregister BYPR2, das Teststatusregister TSR, das Testinforegister TIR sowie die Multiplexer M13 und M14 enthaltenen Teil der Prozessorschaltung im Befehlsregister INSTR2 eingestellt. Da eine Kollision somit ausgeschlossen ist, kann in diesen Fällen ein Selbsttest für den übrigen Teil der Prozessorschaltung über das Testcontrollregister TCR eingestellt werden. Beim Fertigungstest bleiben alle Befehlsarten des Befehlsregisters INSTR2 bestehen, jedoch wird der Datenpfad mit Hilfe des Demultiplexers D4 und des Multiplexers M9 aufgetrennt und überbrückt. Der Befehlssatz ist dazu verdoppelt und ein zusätzlicher Befehl für den Test übriger Schaltungsteile CT1 bis CTn der Baugruppe, wobei im Ausführungsbeispiel n = 4 ist, hinzugefügt worden.

Das zusätzliche Teststatusregister ermöglicht, es den Prozessorkern über den internen bidirektionalen Bus IBUS und über den Testbus, der an den Testdateneingang TDI, den Testdatenausgang TDO, den Testmodusauswahleingang TMS und den Testtakteingang TCK angeschlossen ist, Informationen auszugeben. Das Testinforegister TIR ermöglicht die Übergabe von Informationen an den Prozessorkern über den Testbus. Der Verlauf des jeweiligen Datenpfades wird durch jeweils den Inhalt des Befehlsregisters INSTR2, des Testcontrollregisters TCR und des Befehlsregisters INSTR1 festgelegt. Bei widersprüchlichen Befehlsinhalten setzt sich stets das erstere durch. Das letztere hat dabei die niedrigste Priorität. Hierdurch ist gewährleistet, daß von außen zu jeder Zeit die volle Kontrolle über die Baugruppe übernommen werden kann.

Vorteilhafte Eigenschaften einer erfindungsgemäßen Prozessorschaltung sind zum einen, daß die Schaltung bezüglich des Testdateneingangs TDI, des Testdatenausgangs TDO, des Testmodusauswahleingangs TMS und des Testtakteingangs TCK, also bezüglich der Schnittstelle zum Testbus, der im Standard festgelegten Struktur jederzeit entspricht, und zum anderen, daß ein Selbsttest der Baugruppe sowohl durch das Betriebssystem der Prozessorschaltung als auch durch eine externe Testeinrichtung von außen über den Testbus gestartet werden kann. Dabei können Informationen über die auszuführenden Einzeltests und die Testresultate bzw. den Ablauf der Tests über den Testbus ausgetauscht werden. Zudem ist gewährleistet, daß der Selbsttest jederzeit angehalten werden kann, daß die Prozessorschaltung über den Testbus zurückgesetzt werden kann und daß ebenfalls ein Interrupt ausgelöst werden kann. Die erfindungsgemäße Prozessorschaltung ist insbesondere zur Integration in Mikroprozessoren, Mikrocomputern und Mikrocontrollern geeignet und gestattet den Aufbau hierarchisch testbarer Gesamtsysteme aus mehreren Baugruppen.

## Patentansprüche

1. Schaltung zum Testen einer Baugruppe mit einem Prozessorkern (PC) und weiteren Schaltungsteilen gemäß dem IEEE Standard 1149.1 für Boundary Scan,
mit einem Testcontrollregister (TCR), das mit dem Prozessorkern (PC) verbunden ist,
mit einem Testcontroller (TAPC1), der an eine interne Testtaktleitung (TCKI) und eine interne Testmodusauswahlleitung (TMSI) angeschlossen ist,
mit einem Demultiplexer (D1), dessen Eingang mit einer internen Testdateneingangsleitung (TDII) verbunden ist,
mit einem Befehlsregister (INSTR1) und einem Bypassregister (BYPR1), deren Eingänge mit Ausgängen des Demultiplexers (D1) verbunden sind,
mit einem Dekoder (DEC1), der mit dem Befehlsregister (INSTR1), dem Testcontroller (TAPC1) und dem Testcontrollregister (TCR) gekoppelt ist,
mit einem Multiplexer (M10), bei dem Eingänge an die Ausgänge des Befehlsregisters (INSTR1) und des Bypassregisters (BYPR1) angeschlossen sind,
mit mehreren in Reihe geschalteten Boundary-Scan-Registern (BSR1 bis BSR5) und Registerzellen (T3 bis T6), die zwischen einen Ausgang des Demultiplexers (D1) und einen Eingang des Multiplexers (M10) geschaltet sind, wobei jeweils eine Registerzelle (T3 bis T6) mit einem externen Testtaktausgang (TCKO), einem externen Testausgang (TO), einem externen Testeingang (T1) und einem Testmodusauswahlausgang (TMSO) gekoppelt ist,
mit einem Port (PORT), der zwischen Registerzellen (T3 bis T6) und Prozessorkern (PC) geschaltet ist,
mit einem aus weiteren Multiplexern (M1 bis M9, M11, M12, M13) und Demultiplexern (D2 bis D5) bestehenden Schaltwerk,
das mit einem externen Testtakteingang (TCK), mit einem externen Testmodusauswahleingang (TMS), mit einem externen Testdateneingang (TDI), mit einem externen Testdatenausgang (TDO), mit der internen Testdatenausgangsleitung (TDII), mit der internen Testtaktleitung (TCKI), mit der internen Testmodusauswahlleitung (TMSI), mit der internen Testdatenausgansleitung (TDOI), mit dem Testcontroller (TAPC1), dem Demultiplexer (D1), den Registerzellen (T3 bis T6), dem Port (PORT), den Boundary-Scan-Registern (BSR1 bis BSR5), dem externen Testausgang (TO) und dem externen Testeingang (TI) verbunden ist, wobei das Schaltwerk derart ausgebildet ist, daß es zum Selbsttest die interne Testtaktleitung (TCKI), die interne Testmodusauswahlleitung (TMSI), die interne Testdateneingangsleitung (TDII) und die interne Testdatenausgangsleitung (TDOI) vom externen Testtakteingang (TCK), vom externen Testmodusauswahleingang (TMS), vom externen Testdateneingang (TDI) sowie vom externen Testdatenausgang (TDO) abkoppelt und an den externen Testtaktausgang (TCKO), an den Testmodusauswahlausgang (TMSO), an den Testeingang (TI) sowie an den Testausgang (TO) ankoppelt und
zum Fertigungstest den externen Testdateneingang (TDI) mit dem externen Testausgang (TO), den externen Testtakteingang (TCK) mit dem externen Testtaktausgang (TCKO), den externen Testeingang (TI) mit dem externen Testdatenausgang (TDO) sowie den externen Testmodusauswahlausgang (TMSO) mit einem zusätzlichen externen Testmodusauswahleingang (TMSH) koppelt.

2. Prozessorschaltung nach Anspruch 1, **gekennzeichnet**
durch einen Prozessorkern (PC), der an einen internen bidirektionalen Bus (IBUS), eine interne Prozessorresetleitung (PRI), eine interne Prozessorinterruptleitung (PII), eine Testlogikresetleitung (TLR) und eine Zellenleseleitung (CER) angeschlossen ist,
durch einen Port (PORT), der an den internen bidirektionalen Bus (IBUS) sowie an Ein- und Ausgabeleitungen angeschlossen ist,
durch einen ersten Multiplexer (M1), bei dem ein Eingang mit dem externen Testdateneingang (TDI) gekoppelt ist und ein anderer Eingang an eine erste Eingabeleitung des Ports (PORT) angeschlossen ist,
durch einen ersten Demultiplexer (D1), der dem ersten Multiplexer (M1) nachgeschaltet ist,
durch ein erstes Boundary-Scan-Register (BSR1), ein Befehlsregister (INSTR1), ein Bypassregister (BYPR1) sowie einen zweiten Multiplexer (M2), bei denen ein Eingang jeweils mit einem Ausgang des ersten Demultiplexers (D1) verbunden ist,
durch einen zweiten Demultiplexer (D2), der dem ersten Boundary-Scan-Register (BSR1) nachgeschaltet ist,
durch eine erste Registerzelle (T1), bei der ein Paralleleingang mit einem externen Takteingang (CLK) und ein Serielleingang mit einem Ausgang des zweiten Demultiplexers (D2) verbunden ist und bei der ein Parallelausgang an die Zellenleseleitung (CER) angeschlossen ist,
durch einen dritten Multiplexer (M3), bei dem ein Eingang an einem Seriellausgang der ersten Registerzelle (T1) und ein anderer Eingang an einem weiteren Ausgang des zweiten Demultiplexers (D2) angeschlossen ist,
durch ein zweites Boundary-Scan-Register (BSR2), das dem dritten Multiplexer (M3) nachgeschaltet ist,
durch einen dritten Demultiplexer (D3), der dem zweiten Boundary-Scan-Register (BSR2) nachgeschaltet ist,
durch ein drittes Boundary-Scan-Register (BSR3), das einem Ausgang des dritten Demultiplexers (D3) nachgeschaltet ist und das zudem an einen externen bidirektionalen Bus (EBUS) sowie an den internen bidirektionalen Bus (IBUS) angeschlossen ist,
durch einen vierten Multiplexer (M4), bei dem ein Eingang an einem weiteren Ausgang des dritten Demultiplexers (D3) und ein anderer Eingang an einem Ausgang des dritten Boundary-Scan-Registers (BSR3) angeschlossen ist,
durch ein viertes Boundary-Scan-Register (BSR4), das dem vierten Multiplexer (M4) nachgeschaltet ist,
durch einen vierten Demultiplexer (D4), der dem vierten Boundary Scan-Register (BSR4) nachgeschaltet ist,
durch eine zweite Registerzelle (T2), bei der ein Paralleleingang mit einem zusätzlichen externen Testmodusauswahleingang (TMSH) und ein Serielleingang mit einem Ausgang des vierten Demultiplexers (D4) verbunden ist,
durch einen fünften Demultiplexer (D5), der einem Seriellausgang der zweiten Registerzelle nachgeschaltet ist,
durch einen fünften Multiplexer (M5), bei dem ein Eingang mit einem Seriellausgang des fünften Demultiplexers (D5) und ein anderer Eingang mit dem externen Testdatenausgang (TDO) gekoppelt ist,
durch eine dritte Registerzelle (T3), bei der ein Serielleingang an den Ausgang des fünften Multiplexers (M5) und ein Paralleleingang an den Ausgang des über einen weiteren Eingang mit einer ersten Ausgabeleitung des Ports (PORT) verbundenen zweiten Multiplexers (M2) angeschlossen ist und bei der ein Parallelausgang mit dem externen Testausgang (TO) verbunden ist,
durch eine vierte Registerzelle (T4), bei der ein Serielleingang ebenso wie eine zweite Eingabeleitung des Ports (PORT) mit einem Seriellausgang der dritten Registerzelle (T3) und ein Parallelausgang mit dem externen Testmodusauswahlausgang (TMSO) verbunden ist,
durch eine fünfte Registerzelle (T5), bei der ein Serielleingang mit einem Seriellausgang der vierten Registerzelle (T4) und ein Parallelausgang mit dem externen Testtaktausgang (TCKO) verbunden ist,
durch einen sechsten Multiplexer (M6), bei dem ein Eingang an den externen Testausgang (TO) und ein anderer Eingang an einen externen Testeingang (TI) angeschlossen ist,
durch eine sechste Registerzelle (T6), bei der ein Serielleingang mit einem Seriellausgang der fünften Registerzelle (T5) und ein Paralleleingang mit dem Ausgang des sechsten Multiplexers (M6) verbunden ist und bei der ein Parallelausgang an die erste Eingabeleitung des Ports (PORT) angeschlossen ist,
durch einen sechsten Multiplexer (M6), bei dem jeweils ein Eingang mit einem Seriellausgang der sechsten Registerzelle (T6), einem weiteren Ausgang des vierten Demultiplexers (D4) und einem weiteren Ausgang des fünften Demultiplexers (D5) verbunden ist,
durch einen siebten Multiplexer (M7), bei dem ein Eingang an einen Parallelausgang der zweiten Registerzelle (T2) und ein anderer Eingang an eine zweite Ausgabeleitung des Ports (PORT) angeschlossen ist und bei dem der Ausgang mit einem Paralleleingang der vierten Registerzelle (T4) verbunden ist,
durch einen achten Multiplexer (M8), bei dem ein Eingang an den externen Testtakteingang (TCK) und ein anderer Eingang an eine dritte Ausgabeleitung des Ports (PORT) angeschlossen ist und bei dem der Ausgang mit einem Paralleleingang der fünften Registerzelle (T5) verbunden ist,
durch ein fünftes Boundary-Scan-Register (BSR5), das dem sechsten Multiplexer (M6) nachgeschaltet ist,
durch einen zehnten Multiplexer (M10), bei dem jeweils ein Eingang mit der ersten Eingabeleitung des Ports (PORT), einem Ausgang des fünften Boundary-Scan-Registers (BSR5), einem Ausgang des ersten Befehlsregisters (INSTR1) und einem Ausgang des Bypassregisters (BYPR1) verbunden ist und bei dem der Ausgang an die interne Testdatenausgangsleitung (TDOI) angeschlossen ist,
durch einen elften Multiplexer (M11), bei dem ein Eingang an den externen Testmodusauswahleingang (TMS) und ein anderer Eingang an den Ausgang des siebten Multiplexers (M7) angeschlossen ist,
durch einen zwölften Multiplexer (M12), bei dem ein Eingang an den externen Testtakteingang (TCK) und ein anderer Eingang an den Ausgang des achten Multiplexers (M8) angeschlossen ist,
durch einen Testcontroller (TAPC1), bei dem ein Eingang über die interne Testmodusleitung (TMSI) an den Ausgang des elften Multiplexers (M11) und ein anderer Eingang über die interne Testtaktleitung (TCKI) an den Ausgang des zwölften Multiplexers (M12) angeschlossen ist, und
durch einen Decoder (DEC1), der über unidirektionale Busleitungen mit Ausgängen des Testcontrollregisters (TCR), des Testcontrollers (TAPC1) und des Befehlsregisters (INSTR1) verbunden ist und der zur Ansteuerung der Demultiplexer (D1 bis D5), der Multiplexer (M1 bis M10), der Boundary-Scan-Register (BSR1 bis BSR5) und der Registerzellen (T1 bis T6) vorgesehen ist.

3. Prozessorschaltung nach Anspruch 2,
**dadurch gekennzeichnet,**
daß der externe Testdateneingang (TDI) und der eine Eingang des ersten Multiplexers (M1) über einen sechsten Demultiplexer (D6), dessen Eingang mit dem externen Testdateneingang (TDI) verbunden ist, und über einen dreizehnten Multiplexer (M13), dessen Ausgang an den Eingang des ersten Multiplexers (M1) angeschlossen ist, miteinander gekoppelt sind,
daß jeweils ein Ausgang des sechsten Demultiplexers (D6) mit jeweils einem Eingang des dreizehnten Multiplexers (M13) direkt sowie unter Zwischenschaltung eines weiteren Befehlsregisters (INSTR2), eines weiteren Bypassregisters (BYPR2), eines Teststatusregisters (TSR) und eines Testinforegisters (TIR) verbunden ist,
daß Teststatusregister (TSR) und Testinforegister (TIR) zusätzlich an den internen bidirektionalen Bus (IBUS) angeschlossen sind,
daß ein weiterer Testcontroller (TAPC2), bei dem ein Eingang mit dem externen Testtakteingang (TCK) und ein anderer Eingang mit dem externen Testmodusauswahleingang (TMS) verbunden ist, und ein weiterer Decoder (DEC2), dessen Eingänge über unidirektionale Busleitungen mit dem weiteren Befehlsregister (INSTR2), dem weiteren Testcontroller (TAPC2) sowie dem Testkontrollregister (TCR) verbunden sind und dessen Ausgänge an die interne Prozessorrestleitung (PRI), die interne Prozessorinterruptleitung (PII) und die interne Testlogikresetleitung (TLR) angeschlossen sind, vorgesehen sind und
daß zwischen externem Testdatenausgang (TDO) und interner Testdatenausgangsleitung (TDOI) ein vierzehnter Multiplexer (M14) geschaltet ist, bei dem ein Eingang mit dem externen Testdatenausgang (TDO) und ein anderer Eingang mit dem Ausgang des dreizehnten Multiplexers (M13) verbunden ist und dessen Ausgang an den externen Testdatenausgang angeschlossen ist.

4. Prozessorschaltung nach Anspruch 3,
**dadurch gekennzeichnet**,
daß der weitere Decoder (DEC2) über Steuerleitungen mit dem Decoder (DEC1) sowie mit dem dreizehnten und vierzehnten Multiplexer (M13, M14) und dem sechsten Demultiplexer (D6) verbunden ist.

5. Prozessorschaltung nach Anspruch 2 oder 3,
**dadurch gekennzeichnet,**
daß ein interner Daten- und Programmspeicher (IMEM) vorgesehen ist, der an den internen bidirektionalen BUS (IBUS) angeschlossen ist.

6. Prozessorschaltung nach einem der Ansprüche 2 bis 5,
**dadurch gekennzeichnet,**
daß ein Herstellerregister (MAR) zwischen einen weiteren Ausgang des ersten Demultiplexers (D1) und einen weiteren Eingang des zehnten Multiplexers (M10) geschaltet ist.

7. Prozessorschaltung nach einem der Ansprüche 3 bis 6,
**dadurch gekennzeichnet**,
daß der Inhalt des Befehlsregisters (INSTR1) eine niedrigere Priorität als der des Testcontrollregisters (TCR), und der Inhalt des Testcontrollregisters (TCR) wiederum eine niedrigere Priorität als der des weiteren Befehlregisters (INSTR2) aufweist.

## Claims

1. Circuit for testing an assembly having a processor core (PC) and further circuit parts in accordance with IEEE Standard 1149.1 for Boundary Scan,
having a test control register (TCR) which is connected to the processor core (PC),
having a test controller (TAPC1), which is connected to an internal test clock line (TCKI) and an internal test mode selection line (TMSI),
having a demultiplexer (D1) whose input is connected to an internal test data input line (TDII),
having an instruction register (INSTR1) and a bypass register (BYPR1) whose inputs are connected to outputs from the demultiplexer (D1),
having a decoder (DEC1) which is coupled to the instruction register (INSTR1), to the test controller (TAPC1) and to the test control register (TCR),
having a mutiplexer (M10) in which the inputs are connected to the outputs from the instruction register (INSTR1) and from the bypass register (BYPR1),
having a plurality of series-connected boundary-scan registers (BSR1 to BSR5) and register cells (T3 to T6) which are connected between one output from the demultiplexer (D1) and one input to the multiplexer (M10), one register cell (T3 to T6) in each case being coupled to an external test clock output (TCKO), an external test output (TO), an external test input (T1) and a test mode selection output (TMSO),
having a port (PORT) which is connected between the register cells (T3 to T6) and the processor core (PC), having a switching mechanism which comprises further multiplexers (M1 to M9, M11, M12, M13) and demultiplexers (D1 to D5) and is connected to an external test clock input (TCK), to an external test mode selection input (TMS), to an external test data input (TDI), to an external test data output (TDO), to the internal test data output line (TDII), to the internal test clock line (TCKI), to the internal test mode selection line (TMSI), to the internal test data output line (TDOI), to the test controller (TAPC1), to the demultiplexer (D1), to the register cells (T3 to T6), to the port (PORT), to the boundary-scan registers (BSR1 to BSR5), to the external test output (TO) and to the external test input (TI), the switching mechanism being constructed in such a manner that, for self test, it decouples the internal test clock line (TCKI), the internal test mode selection line (TMSI), the internal test data input line (TDII) and the internal test data output line (TDOI) from the external test clock input (TCK), from the external test mode selection input (TMS), from the external test data input (TDI) and from the external test data output (TDO) and couples them to the external test clock output (TCKO), to the test mode selection output (TMSO), to the test input (TI) and to the test output (TO) and, for the production test, couples the external test data input (TDI) to the external test output (TO), the external test clock input (TCK) to the external test clock output (TCKO), the external test input (TI) to the external test data output (TDO) and the external test mode selection output (TMSO) to an additional external test mode selection input (TMSH).

2. Processor circuit according to Claim 1, characterized by a processor core (PC) which is connected to an internal bidirectional bus (IBUS), an internal processor reset line (PRI), an internal processor interrupt line (PII), a test logic reset line (TLR) and a cell read line (CER),
by a port (PORT) which is connected to the internal bidirectional bus (IBUS) and to input and output lines, by a first multiplexer (M1) in which one input is coupled to the external test data input (TDI) and another input is connected to a first input line to the port (PORT), by a first demultiplexer (D1) which is connected downstream of the first multiplexer (M1),
by a first boundary-scan register (BSR1), an instruction register (INSTR1), a bypass register (BYPR1) and a second multiplexer (M2) in which one input is in each case connected to one output from the first demultiplexer (D1),
by a second demultiplexer (D2) which is connected downstream of the first boundary-scan register (BSR1),
by a first register cell (T1) in which a parallel input is connected to an external clock input (CLK) and a serial input is connected to an output from the second demultiplexer (D2), and in which a parallel output is connected to the cell read line (CER),
by a third multiplexer (M3) in which one input is connected to a serial output from the first register cell (T1) and another input is connected to a further output from the second demultiplexer (D2),
by a second boundary-scan register (BSR2) which is connected downstream of the third multiplexer (M3),
by a third demultiplexer (D3) which is connected downstream of the second boundary-scan register (BSR2),
by a third boundary-scan register (BSR3) which is connected downstream of an output from the third demultiplexer (D3) and is additionally connected to an external bidirectional bus (EBUS) and to the internal bidirectional bus (IBUS),
by a fourth multiplexer (M4) in which one input is connected to a further output from the third demultiplexer (D3) and another input is connected to an output from the third boundary-scan register (BSR3),
by a fourth boundary-scan register (BSR4) which is connected downstream of the fourth multiplexer (M4),
by a fourth demultiplexer (D4) which is connected downstream of the fourth boundary-scan register (BSR4),
by a second register cell (T2) in which a parallel input is connected to an additional external test mode selection input (TMSH) and a serial input is connected to an output from the fourth demultiplexer (D4),
by a fifth demultiplexer (D5) which is connected downstream of a serial output from the second register cell, by a fifth multiplexer (M5) in which one input is coupled to a serial output from the fifth demultiplexer (D5) and another input is coupled to the external test data output (TDO),
by a third register cell (T3) in which a serial input is connected to the output from the fifth multiplexer (M5) and a parallel input is connected to the output from the second multiplexer (M2), which is connected via a further input to a first output line from the port (PORT), and in which third register cell (T3) a parallel output is connected to the external test output (TO),
by a fourth register cell (T4) in which a serial input is connected, in the same way as a second input line to the port (PORT), to a serial output from the third register cell (T3) and a parallel output is connected to the external test mode selection output (TMSO),
by a fifth register cell (T5) in which a serial input is connected to a serial output from the fourth register cell (T4) and a parallel output is connected to the external test clock output (TCKO),
by a sixth multiplexer (M6) in which one input is connected to the external test output (TO) and another input is connected to an external test input (TI),
by a sixth register cell (T6) in which a serial input is connected to a serial output from the fifth register cell (T5) and a parallel input is connected to the output from the sixth multiplexer (M6), and in which sixth register cell (T6) a parallel output is connected to the first input line to the port (PORT),
by a sixth multiplexer (M6) in which one input is in each case connected to a serial output from the sixth register cell (T6), to a further output from the fourth demultiplexer (D4) and to a further output from the fifth demultiplexer (D5),
by a seventh multiplexer (M7) in which one input is connected to a parallel output from the second register cell (T2) and another input is connected to a second output line from the port (PORT), and in the case of which the output is connected to a parallel input to the fourth register cell (T4),
by an eighth multiplexer (M8) in which one input is connected to the external test clock input (TCK) and another input is connected to a third output line from the port (PORT), and in which the output is connected to a parallel input to the fifth register cell (T5),
by a fifth boundary-scan register (BSR5) which is connected downstream of the sixth multiplexer (M6),
by a tenth multiplexer (M10), in which one input is in each case connected to the first input line to the port (PORT), to an output from the fifth boundary-scan register (BSR5), to an output from the first instruction register (INSTR1) and to an output from the bypass register (BYPR1), and in which the output is connected to the internal test data output line (TDOI),
by an eleventh multiplexer (M11), in which one input is connected to the external test mode selection input (TMS) and another input is connected to the output from the seventh multiplexer (M7),
by a twelfth multiplexer (M12) in which one input is connected to the external test clock input (TCK) and another input is connected to the output from the eighth multiplexer (M8),
by a test controller (TAPC1) in which one input is connected via the internal test mode line (TMSI) to the output from the eleventh multiplexer (M11) and another input is connected via the internal test clock line (TCKI) to the output from the twelfth multiplexer (M12), and
by a decoder (DEC1) which is connected via unidirectional bus lines to outputs from the test control register (TCR), from the test controller (TAPC1) and from the instruction register (INSTR1), and which decoder (DEC1) is provided for driving the demultiplexers (D1 to D5), the multiplexers (M1 to M10), the boundary-scan registers (BSR1 to BSR5) and the register cells (T1 to T6).

3. Processor circuit according to Claim 2, characterized in that the external test data input (TDI) and one input to the first multiplexer (M1) are coupled to one another via a sixth demultiplexer (D6) whose input is connected to the external test data input (TDI), and via a thirteenth multiplexer (M13) whose output is connected to the input to the first multiplexer (M1),
in that one output from the sixth demultiplexer (D6) is in each case connected to one input to the thirteenth multiplexer (M13) directly and with the interposition of a further instruction register (INSTR2), a further bypass register (BYPR2), a test status register (TSR) and a test information register (TIR),
in that the test status register (TSR) and the test information register (TIR) are additionally connected to the internal bidirectional bus (IBUS),
in that a further test controller (TAPC2), in which one input is connected to the external test clock input (TCK) and another input is connected to the external test mode selection input (TMS), and a further decoder (DEC2), whose inputs are connected via unidirectional bus lines to the further instruction register (INSTR2), to the further test controller (TAPC2) and to the test control register (TCR) and whose outputs are connected to the internal processor reset line (PRI), to the internal processor interrupt line (PII) and to the internal test logic reset line (TLR), are provided and
in that a fourteenth multiplexer (M14) is connected between the external test data output (TDO) and the internal test data output line (TDOI), in which fourteenth multiplexer (M14) one input is connected to the external test data output (TDO) and another input is connected to the output from the thirteenth multiplexer (M13) and whose output is connected to the external test data output.

4. Processor circuit according to Claim 3, characterized in that the further decoder (DEC2) is connected via control lines to the decoder (DEC1) as well as to the thirteenth and fourteenth multiplexers (M13, M14) and to the sixth demultiplexer (D6).

5. Processor circuit according to Claim 2 or 3, characterized in that an internal data and program memory (IMEM) is provided which is connected to the internal bidirectional BUS (IBUS).

6. Processor circuit according to one of Claims 2 to 5, characterized in that a manufacturer's register (MAR) is connected between a further output from the first demultiplexer (D1) and a further input to the tenth multiplexer (M10).

7. Processor circuit according to one of Claims 3 to 6, characterized in that the contents of the instruction register (INSTR1) have a lower priority than those of the test control register (TCR), and the contents of the test control register (TCR) in turn have a lower priority than those of the further instruction register (INSTR2).

## Revendications

1. Circuit test d'un module comportant un noyau (PC) processeur et d'autres parties de circuit suivant la norme IEEE 1149.1 de Boundary Scan, comprenant
un registre (TCR) de contrôle de test, qui est relié au noyau processeur (PC),
un contrôleur (TAPC1) de test, qui est connecté à une ligne intérieure (TCKI) de cadence de test et à une ligne intérieure (TMSI) de sélection de mode de test,
un démultiplexeur (D1), dont l'entrée est reliée à une ligne (TDII) intérieure d'entrée de données de test,
un registre (INSTR1) d'instructions et un registre (BYPR1) de délestage, dont les entrées sont reliées aux sorties du démultiplexeur (D1),
un décodeur (DEC1), qui est couplé au registre (INSTR1) d'instructions, au contrôleur (TAPC1) de test et au registre (TCR) de contrôle de test,
un multiplexeur (M10), dans lequel des entrées sont connectées aux sorties du registre (INSTR1) d'instructions et du registre (BYPR1) de délestage,
plusieurs registres Boundary-Scan (BSR1 à BSR5) branchés en série et des cellules (T3 à T6) de registre, qui sont branchées entre une sortie du démultiplexeur (D1) et une entrée du multiplexeur (M10), les cellules (T3 à T6) de registre étant respectivement couplées à une sortie (TCKO) extérieure de cadence de test, à une sortie extérieure (T0) de test, à une entrée extérieure (T1) de test et à une sortie (TMSO) de sélection de mode de test,
un port (PORT), qui est branché entre les cellules (T3 à T6) de registre et le noyau processeur (PC),
un dispositif de commutation, qui est constitué d'autres multiplexeurs (M1 à M9, M11, M12, M13) et de démultiplexeurs (D2 à D5),
et qui est relié à une entrée extérieure (TCK) de cadence de test, à une entrée extérieure (TMS) de sélection de mode de test, à une entrée extérieure (TDI) de données de test, à une sortie extérieure (TDO) de données de test, à la ligne intérieure (TDII) de sortie de données de test, à la ligne intérieure (TCKI) de cadence de test, à la ligne intérieure (TMSI) de sélection de mode de test, à la ligne intérieure (DTOI) de sortie de données de test, au contrôleur (TAPC1) de test, au démultiplexeur (D1), aux cellules (T3 à T6) de registre, au port (PORT), aux registres (BSR1 à BSR5) Boundary-Scan, à la sortie (TO) extérieure de test et à l'entrée (TI) extérieure de test, le dispositif de commutation étant formé de telle sorte qu'il désaccouple pour le test automatique la ligne intérieure (TCKI) de cadence de test, la ligne intérieure (TMSI) de sélection de mode de test, la ligne intérieure (TDII) d'entrée de données de test et la ligne intérieure (TDOI) de sortie de données de test, de l'entrée extérieure (TCK) de cadence de test, de l'entrée extérieure (TMS) de sélection de mode de test, de l'entrée extérieure (TDI) de données de test ainsi que de la sortie (TDO) extérieure de données de test et qu'il les accouple à la sortie extérieure (TCKO) de cadence de test, à la sortie (TMSO) de sélection de mode de test, à l'entrée (TI) de test ainsi qu'à la sortie (TO) de test et
qu'il couple, pour le test de fabrication, I'entrée extérieure (TDI) de données de test à la sortie extérieure (TO) de test, I'entrée extérieure (TCK) de cadence de test à la sortie extérieure (TCKO) de cadence de test, I'entrée extérieure (TI) de test à la sortie extérieure (TDO) de données de test ainsi que la sortie extérieure (TMSO) de sélection de mode de test à une entrée supplémentaire extérieure (TMSH) de sélection de mode de test.

2. Circuit processeur suivant la revendication 1, caractérisé par
un noyau processeur (PC), qui est connecté à un bus intérieur bidirectionnel (IBUS), à une ligne intérieure (PRI) de réinitialisation du processeur, à une ligne intérieure (PII) d'interruption du processeur, à une ligne (TLR) de réinitialisation de la logique de test et à une ligne (CER) de lecture de cellules,
un port (PORT), qui est connecté au bus intérieur bidirectionnel (IBUS) ainsi qu'à des lignes d'entrée et de sortie,
un premier multiplexeur (M1), dans lequel une entrée est couplée à l'entrée extérieure (TDI) de données de test et une autre entrée est connectée à une première ligne d'introduction du port (PORT),
un premier démultiplexeur (D1), qui est branché en aval du premier multiplexeur (M1),
un premier registre (BSR1) Boundary-Scan, un registre (INSTR1) d'instructions, un registre (BYPR1) de délestage ainsi qu'un deuxième multiplexeur (M2), dans lesquels une entrée est reliée respectivement à une sortie du premier démultiplexeur (D1),
un deuxième démultiplexeur (D2), qui est branché en aval du premier registre (BSR1) Boundary-Scan,
une première cellule (T1) de registre, dans laquelle une entrée en parallèle est reliée à une entrée extérieure (CLK) de cadence et une entrée sérielle est reliée à une sortie du deuxième démultiplexeur (D2) et dans laquelle une sortie en parallèle est connectée à la ligne (CER) de lecture de cellules,
un troisième multiplexeur (M3), dans lequel une entrée est connectée à une sortie sérielle de la première cellule (T1) de registre et une autre entrée est connectée à une autre sortie du deuxième démultiplexeur (D2),
un deuxième registre (BSR2) Boundary-Scan, qui est branché en aval du troisième multiplexeur (M3),
un troisième démultiplexeur (D3), qui est branché en aval du deuxième registre (BSR2) Boundary-Scan,
un troisième registre (BSR3) Boundary-Scan, qui est branché en aval d'une sortie du troisième démultiplexeur (D3) et qui est connecté en outre à un bus extérieur (EBUS) bidirectionnel ainsi qu'au bus intérieur bidirectionnel (IBUS),
un quatrième multiplexeur (M4), dans lequel une entrée est connectée à une autre sortie du troisième démultiplexeur (D3) et une autre entrée est connectée à une sortie du troisième registre (BSR3) Boundary-Scan,
un quatrième registre (BSR4) Boundary-Scan, qui est branché en aval du quatrième multiplexeur (M4),
un quatrième démultiplexeur (D4), qui est branché en aval du quatrième registre (BSR4) Boundary-Scan,
une deuxième cellule (T2) de registre, dans laquelle une entrée en parallèle est reliée à une entrée supplémentaire extérieure (TMSH) de sélection de mode de test et une entrée sérielle est reliée à une sortie du quatrième démultiplexeur (D4), un cinquième démultiplexeur (D5), qui est branché en aval d'une sortie sérielle de la deuxième cellule de registre,
un cinquième multiplexeur (M5), dans lequel une entrée est couplée à une sortie sérielle du cinquième démultiplexeur (D5) et une autre entrée est couplée à la sortie extérieure (TDO) de données de test,
une troisième cellule (T3) de registre, dans laquelle une entrée sérielle est connectée à la sortie du cinquième multiplexeur (M5), une entrée en parallèle est connectée à la sortie du deuxième multiplexeur (M2) relié par l'intermédiaire d'une autre entrée à une première ligne se sortie du port (PORT) et dans laquelle une sortie en parallèle est reliée à la sortie extérieure (TO) de test,
une quatrième cellule (T4) de registre, dans laquelle une entrée sérielle est reliée, tout comme une deuxième ligne d'introduction du port (PORT), à une sortie sérielle de la troisième cellule (T3) de registre et une sortie en parallèle est reliée à la sortie (TMSO) extérieure de sélection de mode de test,
une cinquième cellule (T5) de registre, dans laquelle une entrée sérielle est reliée à une sortie sérielle de la quatrième cellule (T4) de registre et une sortie en parallèle est reliée à la sortie extérieure (TCKO) de cadence de test,
un sixième multiplexeur (M6), dans lequel une entrée est connectée à la sortie extérieure (TO) de test et une autre entrée est connectée à une entrée extérieure (TI) de test,
une sixième cellule (T6) de registre, dans laquelle une entrée sérielle est reliée à une sortie sérielle de la cinquième cellule (T5) de registre et une entrée en parallèle est reliée à la sortie du sixième multiplexeur (M6) et dans laquelle une sortie en parallèle est connectée à la première ligne d'introduction du port (PORT),
un sixième multiplexeur (M6), dans lequel une entrée est reliée à une sortie sérielle de la sixième cellule (T6) de registre, à une autre entrée du quatrième démultiplexeur (D4) et à une autre sortie du cinquième démultiplexeur (D5),
un septième multiplexeur (M7), dans lequel une entrée est connectée à une sortie en parallèle de la deuxième cellule (T2) de registre et une autre entrée est connectée à une deuxième ligne de sortie du port (PORT) et dans lequel la sortie est reliée à une entrée en parallèle de la quatrième cellule (T4) de registre,
un huitième multiplexeur (M8), dans lequel une entrée est connectée à l'entrée extérieure (TCK) de cadence de test et une autre entrée est connectée à une troisième ligne de sortie du port (PORT) et dans lequel la sortie est reliée à une entrée en parallèle de la cinquième cellule (T5) de registre,
un cinquième registre (BSR5) Boundary-Scan, qui est branché en aval du sixième multiplexeur (M6),
un dixième multiplexeur (M10), dans lequel une entrée est connectée à la première ligne d'introduction du port (PORT), à une sortie du cinquième registre (BSR5) Boundary-Scan, à une sortie du premier registre (INSTR1) d'instructions et à une sortie du registre (BYPR1) de délestage et dans lequel la sortie est connectée à la ligne intérieure (TDOI) de sortie de données de test,
un onzième multiplexeur (M11), dans lequel une entrée est connectée à l'entrée extérieure (TMS) de sélection de mode de test et une autre entrée est connectée à la sortie du septième multiplexeur (M7),
un douzième multiplexeur (M12), dans lequel une entrée est connectée à l'entrée extérieure (TCK) de cadence de test et une autre entrée est connectée à la sortie du huitième multiplexeur (M8),
un contrôleur (TAPC1) de test, dans lequel une entrée est connectée par l'intermédiaire de la ligne intérieure (TMSI) de mode de test à la sortie du onzième multiplexeur (M11) et une autre entrée est connectée par l'intermédiaire de la ligne (TCKI) intérieure de cadence de test à la sortie du douzième multiplexeur (M12), et un décodeur (DEC1), qui est relié par l'intermédiaire de lignes unidirectionnelles de bus à des sorties du registre (TCR) de contrôle de test, du contrôleur (TAPC1) de test et du registre (INSTR1) d'instructions et qui est prévu pour la commande des démultiplexeurs (D1 à D5), des multiplexeurs (M1 à M10, des registres (BSR1 à BSR5) Boundary-Scan et des cellules (T1 à T6) de registre.

3. Circuit processeur suivant la revendication 2,
caractérisé en ce que
l'entrée extérieure (TDI) de données de test et l'une des entrées du premier multiplexeur (M1) sont couplées l'une à l'autre par l'intermédiaire d'un sixième démultiplexeur (D6), dont l'entrée est reliée à l'entrée extérieure (TDI) de données de test, et par l'intermédiaire d'un treizième multiplexeur (M13), dont la sortie est connectée à l'entrée du premier multiplexeur (M1),
une sortie du sixième démultiplexeur (D6) est reliée à une entrée du treizième multiplexeur (M13) directement ainsi que par branchement intermédiaire d'un autre registre (INSTR2) d'instructions, d'un autre registre (BYPR2) de délestage, d'un registre (TSR) d'états de test et d'un registre (TIR) d'informations de test,
le registre (TSR) d'états de test et le registre (TIR) d'informations de test sont connectés en plus au bus intérieur bidirectionnel (IBUS),
il est prévu un autre contrôleur (TAPC2) de test, dans lequel une entrée est reliée à l'entrée extérieure (TCK) de cadence de test et une autre entrée à l'entrée (TMS) extérieure de sélection de mode de test, et un autre décodeur (DEC2), dont les entrées sont reliées par l'intermédiaire de lignes unidirectionnelles de bus à l'autre registre (INSTR2) d'instructions, à l'autre contrôleur (TAPC2) de test ainsi qu'au registre (TCR) de contrôle de test et dont les sorties sont connectées à la ligne intérieure (PRI) de réinitialisation du processeur, à la ligne (PII) intérieure d'interruption du processeur et à la ligne (TLR) intérieure de réinitialisation de la logique de test, et
un quatorzième multiplexeur (M14), dans lequel une entrée est reliée à la sortie extérieure (TDOI) de données de test et une autre entrée est reliée à la sortie du treizième multiplexeur (M13) et dont la sortie est connectée à la sortie extérieure de données de test, est branché entre la sortie extérieure (TDO) de données de test et la ligne intérieure (TDOI) de sortie de données de test.

4. Circuit processeur suivant la revendication 3,
caractérisé en ce que
l'autre décodeur (DC2) est relié par l'intermédiaire de lignes de commande au décodeur (DC1) ainsi qu'aux treizième et quatorzième multiplexeurs (M13, M14) et au sixième démultiplexeur (D6).

5. Circuit processeur suivant la revendication 2 ou 3,
caractérisé en ce que
il est prévu une mémoire intérieure (IMEM) de données et de programmes, qui est connectée au bus intérieur bidirectionnel (IBUS).

6. Circuit processeur suivant l'une des revendications 2 à 5,
caractérisé en ce que
un registre (MAR) de production est branché entre une autre sortie du premier démultiplexeur (D1) et une autre entrée du dixième multiplexeur (M10).

7. Circuit processeur suivant l'une des revendications 3 à 6,
caractérisé en ce que
le contenu du registre (INSTR1) d'instructions a une priorité moindre que celle du contenu du registre (TCR) de contrôle de test, et le contenu du registre (TCR) de contrôle de test a de nouveau une priorité moindre que celle du contenu de l'autre registre (INSTR2) d'instructions.
